Europäisches Patentamt

European Patent Office

Office européen des brevets

(19)

(11) Numéro de publication: **0 396 440**
**A1**

## (12) DEMANDE DE BREVET EUROPEEN

(21) Numéro de dépôt: **90400919.8**

(22) Date de dépôt: **04.04.90**

(51) Int. Cl.5: **C01F 5/28, C01F 5/24**

(30) Priorité: **14.04.89 FR 8904951**

(43) Date de publication de la demande:
**07.11.90 Bulletin 90/45**

(84) Etats contractants désignés:
**AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Bonneau, Lionel**
**5, avenue du Parc**
**F-30340 Salindres(FR)**

(74) Mandataire: **Dubruc, Philippe et al**
**RHONE-POULENC CHIMIE Service Brevets**
**Chimie 25, quai Paul-Doumer**
**F-92408 Courbevoie Cédex(FR)**

(54) **Procédé de préparation de magnésite, application à la préparation de fluorure de magnésium et fluorure de magnésium ainsi obtenu.**

(57) L'invention concerne un procédé de préparation de fluorure de magnésium et le fluorure de magnésium ainsi obtenu.

Selon l'invention, on fait réagir du sulfate de magnésium avec un agent de carbonatation pour obtenir l'hydroxycarbonate de magnésium. On fait ensuite réagir sous pression celui-ci avec un agent de carbonatation, ce par quoi on obtient la magnésite que l'on soumet enfin à une fluoration pour obtenir le fluorure de magnésium.

EP 0 396 440 A1

## PROCEDE DE PREPARATION DE MAGNESITE, APPLICATION A LA PREPARATION DE FLUORURE DE MAGNESIUM ET FLUORURE DE MAGNESIUM AINSI OBTENU

La présente invention concerne un procédé de préparation de magnésite, l'application de la magnésite ainsi obtenue à la préparation de fluorure de magnésium et le fluorure de magnésium ainsi préparé.

Le carbonate de magnésium ou magnésite est une matière de base pour les applications céramiques.

Il est habituellement extrait d'un minerai naturel : la dolomie qui est un carbonate double de calcium et de magnésium. La magnésite est obtenue à la suite de plusieurs opérations : flottation, calcination, carbonatation, précipitation sélective pour séparer le calcium du magnésium.

Il existe aussi une possibilité de synthèse directe du carbonate de magnésium à partir d'hydrogénocarbonate de magnésium et de $CO_2$.

Dans le cas des procédés utilisant le minerai naturel, malgré de nombreuses opérations unitaires, on obtient un produit contenant une quantité non négligeable de carbonate de calcium résiduel. En ce qui concerne la synthèse directe la formation de carbonate de magnésium n'est plus quantitative et il persiste, dans le produit obtenu, des espèces hydratées.

On obtient donc un produit contenant des impuretés et ces impuretés sont tout à fait préjudiciables aux applications ultérieures de ce produit.

C'est ainsi qu'il est impossible d'utiliser la magnésite comme précurseur de produits finis pour applications céramiques ou verrières tel que le fluorure de magnésium.

En ce qui concerne ce dernier produit, il existe notamment un procédé de préparation consistant à faire réagir de l'hydroxycarbonate de magnésium avec du fluorure d'ammonium et de l'acide fluorhydrique. Toutefois, ce procédé conduit à un produit de granulométrie élevée et de densité faible. Or, là encore, ceci peut rendre difficile, voire impossible, l'utilisation de fluorure de magnésium dans certaines applications.

Un premier objet de l'invention est donc l'obtention d'un carbonate de magnésium, plus particulièrement utilisable dans les applications céramiques.

Un second objet de l'invention est un fluorure de magnésium utilisable aussi dans les mêmes applications et notamment de densité et pureté élevées et pouvant présenter une granulométrie plus faible que celle du produit issu de la fluoration de l'hydroxycarbonate de magnésium.

Un troisième objet de l'invention est un procédé de préparation d'un fluorure de magnésium à partir du carbonate de magnésium précité qui soit d'une mise en oeuvre plus facile notamment en ce qui concerne l'étape de lavage.

Dans ce but, le procédé de préparation de magnésite, selon l'invention, est caractérisé en ce qu'on fait réagir sous pression de l'hydroxycarbonate de magnésium avec un agent de carbonatation.

Par ailleurs, selon un premier mode de réalisation, le fluorure de magnésium de l'invention est caractérisé en ce qu'il présente une structure cristalline tétragonale de paramètre de maille a d'au moins 0,46375 nm et c d'au moins 0,30410 nm.

Selon un second mode de réalisation, le fluorure de magnésium de l'invention est caractérisé en ce qu'il se présente sous forme de particules de morphologie trigonale ou rhomboedrique constituées de cristallites cristallisant dans le réseau tétragonal.

Enfin, le procédé selon l'invention de préparation de fluorure de magnésium est caractérisé en ce qu'on fait réagir un agent fluorant avec de la magnésite.

D'autres caractéristiques, détails et avantages de l'invention apparaitront plus clairement à la lecture de la description et des exemples concrets qui vont suivre.

Comme on vient de le voir, le fluorure de magnésium ($MgF_2$) de l'invention est caractérisé essentiellement par sa morphologie.

Le produit de l'invention se distingue tout d'abord dans le cadre du premier mode de réalisation par ses paramètres de maille. Dans ce cas, il présente pour ces paramètres une valeur de a d'au moins 0,46375 nm et une valeur de c d'au moins 0,30410 nm.

Habituellement, les valeurs de a et c sont comprises entre 0,46375 et 0,46400 nm et 0,30410 et 0,30460 nm respectivement.

Il est à noter que les produits de l'art antérieur présentent des valeurs de a généralement inférieures à 4,635Å$^{\circ}$. Par exemple spour un produit provenant de la synthèse à partir de l'hydroxycarbonate de magnésium, on a les valeurs suivantes : a = 0,46338 nm et c = 0,30430 nm.

En ce qui concerne le second mode de réalisation de l'invention, le produit se présente sous forme de particules de morphologie trigonale ou rhomboedrique. Ces particules sont constituées par l'assemblage de particules unitaires ou cristallites qui, elles, cristallisent dans le réseau tétragonal.

On peut penser que cette morphologie particulière est due au précurseur du fluorure de magnésium de l'invention comme on le verra plus loin.

De plus, comme dans le premier mode de réalisation décrit plus haut, le fluorure de magnésium du second mode peut aussi présenter un paramètre de maille a d'au moins 0,46375 nm et c d'au moins 0,30410 nm. Ces valeurs pouvant varier dans les mêmes limites que celles données plus haut.

Selon une autre caractéristique commune aux deux modes de réalisation, le fluorure de magnésium de l'invention est constitué de cristallites de taille d'au moins 30 nm. Plus particulièrement, cette taille est d'au moins 35 nm. Ainsi, elle peut être comprise entre 30 et 45 nm et notamment 35 et 45 nm.

A titre de comparaison pour un produit issu de la fluoration de l'hydroxycarbonate de magnésium, les cristallites ont généralement une taille inférieure à 10 nm.

Les caractéristiques morphologiques qui viennent d'être décrites ci-dessus sont spécifiques au produit de l'invention.

On va donner maintenant ci-dessous des indications sur certaines caractéristiques physiques de ce produit.

Il peut présenter une densité apparente qui peut être d'au moins 0,60 plus particulièrement d'au moins 0,68. Cette densité peut par ailleurs aller jusqu'à 0,90.

Pour mesurer la densité apparente, on introduit dans une éprouvette un poids connu de poudre de produit que l'on soumet ensuite à un tassement (10 coups). La mesure du volume occupé alors par la poudre tassée permet d'en déterminer la densité apparente.

En outre, le produit de l'invention peut présenter une densité en cuit d'au moins 2,55, plus particulièrement d'au moins 2,60.

Cette densité en cuit est déterminée de la manière suivante :

5 g de poudre sont introduits dans un moule cylindrique de diamètre 2 cm et soumis à une compression de 10 tonnes pendant 1 minute par l'intermédiaire d'une presse hydraulique. La pastille est ensuite soumise à un traitement thermique de 960°C pendant 2 heures.

Après refroidissement, on mesure l'épaisseur et le diamètre de la pastille, ce qui permet d'accéder à la densité en cuit de la poudre testée.

Il est à noter qu'une caractéristique du produit de l'invention qui peut d'ailleurs être considérée comme significative d'une aptitude améliorée au frittage est une différence élevée entre la densité en cuit et la densité apparente, différence qui est généralement supérieure à celle observée pour les produits de l'art antérieur.

On fait observer aussi que la densité apparente du produit de l'invention peut varier d'une manière importante, notamment dans les limites données plus haut, ceci en fonction de la granulométrie du produit.

A ce sujet, cette granulométrie est variable. Toutefois selon un mode particulier de réalisation de l'invention, il est possible d'avoir un produit de granulométrie fine. Plus précisément, cette granulométrie peut être comprise entre 0,1 et 150 $\mu$m, notamment entre 0,5 et 50 $\mu$m.

Il est bien entendu qu'il est tout à fait possible, sans sortir du cadre de la présente invention, d'avoir un produit plus gros mais de même morphologie.

Enfin, le $MgF_2$ de l'invention présente une pureté élevée. Notamment, sa teneur en calcium peut être inférieure à 150 p.p.m. plus particulièrement 70 ppm.

En outre, il est généralement substantiellement exempt de résidus d'agent fluorant, résidus provenant de la fluoration de son précurseur.

Le $MgF_2$ de l'invention peut être obtenu par réaction d'un agent fluorant avec de la magnésite.

L'agent fluorant peut être choisi dans le groupe comprenant l'acide fluorhydrique, les fluorures alcalins, le fluorure d'ammonium et notamment le bifluorure d'ammonium.

Bien entendu, il est possible d'utiliser des mélanges de ces agents par exemple $NH_4F/HF$ ou KF/HF.

C'est à l'issue de cette fluoration que l'on obtient le produit de l'invention généralement sous la forme du second mode de réalisation décrit ci-dessus. Il est possible en fonction de l'application recherchée de broyer le produit et on obtient alors celui-ci sous la forme du premier mode de réalisation mentionné plus haut.

La nature de la magnésite de départ est importante. Il doit s'agir, en effet, d'un produit cristallisant dans le système trigonal. Par ailleurs, cette magnésite doit présenter une teneur en impuretés, type calcium notamment, très réduite.

Enfin, il est préférable qu'elle présente une granulométrie resserrée.

Cette magnésite peut être obtenue par un procédé qui sera décrit plus loin.

La fluoration, pour obtenir le $MgF_2$ de l'invention, peut se faire de toute manière connue en soi. Généralement, on procède en phase liquide à partir de magnésite en solution dans l'eau. On peut, par exemple, envoyer une solution de magnésite, de préférence chaude, dans un pied de cuve d'HF en solution. On pourrait aussi envisager une fluoration gazeuse par réaction d'HF gazeux anhydre sur un lit fluide de magnésite.

Dans le cas d'un agent fluorant sous forme de poudre, par exemple $NH_4F/HF$ ou XF/HF, on peut procéder par mélange des poudres magnésite - agent fluorant puis chauffage.

Dans le cas de la fluoration en phase liquide, on obtient dans le milieu réactionnel des cristaux de fluorure de magnésium selon l'invention. On a pu observer que le procédé de l'invention, appliqué à une magnésite convenable, conduisait à des cristaux dont la filtration et le lavage sont particulièrement facilités. C'est cette bonne capacité au lavage qui permet d'obtenir notamment un produit particulièrement pur en résidus d'agent fluorant.

Le procédé de l'invention pour obtenir une magnésite convenable pour la préparation de $MgF_2$ selon l'invention est caractérisé en ce qu'on fait réagir sous pression de l'hydroxycarbonate de magnésium avec un agent de carbonatation.

La réaction se fait généralement à chaud, par exemple à une température comprise entre 180 et 240° C.

Comme agent de carbonatation, on peut utiliser le carbonate de sodium ou d'ammonium ou le dioxyde de carbone.

Selon un mode particulier de réalisation de l'invention, la réaction de carbonatation se fait en présence de $CO_2$.

Généralement, on opère en phase liquide à partir d'une suspension aqueuse d'hydroxycarbonate de magnesium et plus particulièrement d'une suspension à une teneur en hydroxycarbonate d'au moins 250 g/l.

La réaction a lieu en principe dans un autoclave. A titre d'exemple, la pression peut varier entre 12 et 25 bars. La durée de la réaction est habituellement d'environ 5 heures.

L'hydroxycarbonate de magnésium susceptible d'être utilisé dans la réaction qui vient d'être décrite ci-dessus est un produit de formule $Mg_5(CO_3)_4OH_2$. Il est préparé, selon l'invention, par réaction d'un précurseur magnésien avec un agent de carbonatation.

Le précurseur peut être choisi dans le groupe comprenant le sulfate, le chlorure ou le nitrate de magnésium.

Comme agent de carbonatation, on peut utiliser un carbonate de sodium ou d'ammonium ou le dioxyde de carbone.

Habituellement, on procède en phase liquide. Dans ce cas, on choisit un précurseur magnésien soluble dans l'eau et on fait réagir une solution de ce précurseur avec l'agent de carbonatation par exemple sous forme de solution lui aussi. On précipite alors l'hydroxycarbonate de magnésium.

Il est préférable de travailler à chaud. Ainsi, on travaille généralement à une température située entre 80 et 90° C.

On obtient un hydroxycarbonate se présentant sous une morphologie type "rose des sables" et de granulométrie pouvant varier entre 0,5 et 250 μm.

L'hydroxycarbonate est filtré. On obtient une pulpe dont la teneur en matière sèche est généralement d'environ 20 %. Cette pulpe sera ensuite utilisée en autoclave pour la préparation de la magnésite selon le procédé décrit plus haut.

Il est à noter que la préparation de l'hydroxycarbonate peut se faire dans le même réacteur, par exemple un autoclave, que la préparation ultérieure de la magnésite. Il faut toutefois, dans ce cas, conformément à l'invention que la préparation de l'hydroxycarbonate ne se fasse pas sous pression.

Des exemples concrets mais non limitatifs vont maintenant être donnés.

## EXEMPLE 1

2 litres d'une solution de carbonate d'ammonium à 2 moles/l sont alimentés en continu sur 2 litres d'une solution de sulfate de magnésium à 2 moles/l et à 90° C. L'hydroxycarbonate de magnésium précipite; il est filtré puis lavé à l'eau déminéralisée.

Cet hydroxycarbonate de magnésium est mis en suspension dans l'eau à raison de 250 g/l, dans un autoclave agité mais non sous pression. Un barbottage de $CO_2$ gaz est assuré pendant 15 minutes dans la suspension.

L'autoclavage pendant 5 heures à 200° C sous une pression de bars permet d'obtenir exclusivement des cristaux de MgCO3 (magnésite) qui sont aisément filtrés et lavés à l'eau déminéralisée. Cette magnésite se présente sous forme de polyèdres cristallisant dans le système trigonal. La granulométrie moyenne des cristaux obtenus est voisine de 10μm (granulométrie déterminée par analyse de microscopie électronique).

Le carbonate de magnésium obtenu est ensuite soumis à la fluoration selon le protocole suivant : 1000 g de MgCO3 à 45% de teneur en H2O sont mis en suspension dans 1000 g d'eau et portés à 70° C; parallèlement on prépare 1 litre d'une solution fluorante d'HF à 15 moles/l portée à 80° C.

La suspension de MgCO3 est alimentée sur la solution fluorante; après un temps de murissement de 30 minutes, la suspension obtenue est filtrée et lavée à l'eau déminéralisée.

On recueille ainsi 450 g de cristaux de fluorure de magnésium possédant la morphologie et la granulométrie du carbonate de magnésium de départ. L'analyse diffraction X confirme l'aspect quantitatif de la réaction de fluoration. La taille des cristallites de MgF2 issues du précurseur MgCO3 est voisine de 40 nm à comparer avec la taille moyenne des cristallites issues d'un précurseur hydroxycarbonate de magnésium soit 9 nm. Les cristallites du produit obtenu cristallisent dans le réseau tétragonal et présentent les paramètres de maille suivants : a = 0,46381 ± 0,00006 nm et c = 0,30441 ± 0,00006 nm.

La densité apparente du produit est de 0,69.

## EXEMPLE 2

L'hydroxycarbonate de magnésium est synthétisé comme dans l'exemple précédent. Une suspension aqueuse à 500 g/l est soumise à un autoclavage après barbottage avec CO2 gaz, à 200°C pendant 5 heures sous une pression de 15 bars. On obtient ainsi exclusivement des cristaux de MgCO3 dont la taille moyenne des particules est voisine de 2$\mu$m (granulométrie déterminée comme dans l'exemple 1).

Ce précurseur à granulométrie plus faible est mis en oeuvre dans un protocole de fluoration identique à l'exemple 1. On obtient un MgF$_2$ identique à celui de l'exemple 1 à la granulométrie près (2$\mu$m).

## EXEMPLE 3

La synthèse de l'hydroxycarbonate de magnésium est réalisée comme dans l'exemple 1; celui-ci est alors mis en suspension dans une solution de carbonate de sodium dans les proportions suivantes :

1200 g d'hydroxycarbonate de magnésium à 80% d'humidité dans litre d'une solution de Na$_2$CO$_3$ à 1 mole/l. L'autoclavage à 200°C pendant 5 heures sous une pression de 15 bars permet d'obtenir 195 g de carbonate de magnésium. Les cristaux obtenus sont lavés à l'eau déminéralisée et sont mis en oeuvre dans une opération de fluoration comme celle de l'exemple 1. Le fluorure de magnésium obtenu possède des caractéristiques de granulométrie et de morphologie du produit de l'exemple 1.

## EXEMPLE 4

La synthèse de l'hydroxycarbonate de magnésium est réalisée comme précédemment; celui-ci est alors mis en suspension dans une solution de carbonate d'ammonium dans des proportions analogues à l'exemple 3. L'autoclavage mené à 200°C pendant 5 heures sous une pression de 20 bars permet d'obtenir 190 g de cristaux de MgCO3 possédant des caractéristiques analogues à l'exemple 1. Le mode opératoire de fluoration est identique à celui des exemples précédents.

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Fluorure de magnésium caractérisé en ce qu'il présente une structure cristalline tétragonale de paramètre de maille a d'au moins 0,46375 nm et c d'au moins 0,30410 nm.

2. Fluorure de magnésium caractérisé en ce qu il se présente sous forme de particules de morphologie trigonale ou rhomboedrique constituées de cristallites cristallisant dans le réseau tétragonal.

3. Fluorure de magnésium selon la revendication 2 caractérisé en ce qu'il présente un paramètre de maille a d'au moins 0,46375 nm et c d'au moins 0,30410 nm

4. Fluorure de magnésium selon l'une des revendications précédentes caractérisé en ce qu'il est constitué de cristallites de taille d'au moins 30 nm plus particulièrement d'au moins 35 nm.

5. Fluorure de magnésium selon les revendications précédentes, caractérisé en ce qu'il présente une densité apparente d'au moins 0,60, plus particulièrement d'au moins 0,68.

6. Fluorure de magnésium selon l'une des revendications précédentes, caractérisé en ce qu'il présente une granulométrie comprise entre 0,1 et 150 $\mu$m plus particulièrement entre 0,5 et 50 um

7. Fluorure de magnésium selon l'une des revendications précédentes, caractérisé en ce qu'il présente une teneur en calcium inférieure à 150 p.p.m. et plus particulièrement inférieure à 70 p.p.m.

8. Procédé de préparation du fluorure de magnésium selon l'une des revendications précédentes, caractérisé en ce qu'on fait réagir un agent fluorant avec de la magnésite.

9. Procédé selon la revendication 8, caractérisé en ce qu'on choisit l'agent fluorant dans le groupe comprenant l'acide fluorhydrique, les fluorures alcalins, le fluorure d'ammonium et notamment le bifluorure d'ammonium.

10. Procédé de préparation de magnésite, caractérisé en ce qu'on fait réagir sous pression de l'hydroxycarbonate de magnésium avec un agent de carbonatation.

11. Procédé selon la revendication 10, caractérisé en ce qu'on conduit la réaction précitée à chaud.

12. Procédé selon la revendication 10 ou 11, caractérisé en ce qu'on conduit la réaction précitée à une température comprise entre 180 et 240°C.

13. Procédé selon l'une des revendications 10 à 12, caractérisé en ce qu'on utilise comme agent de carbonatation un carbonate de sodium ou d'ammonium ou le dioxyde de carbone.

14. Procédé selon l'une des revendications 10 à 13, caractérisé en ce qu'on conduit la réaction en présence en outre de $CO_2$.

15. Procédé selon l'une des revendications 10 à 14, caractérisé en ce qu'on utilise l'hydroxycarbonate de magnésium sous forme d'une suspension aqueuse.

16. Procédé selon la revendication 15, caractérisé en ce que la teneur en hydroxycarbonate de magnésium dans la suspension précitée est d'au moins 250 g/l.

17. Procédé selon l'une des revendications 10 à 16, caractérisé en ce qu on conduit la réaction précitée sous une pression comprise entre 12 et 25 bars.

18. Procédé selon l'une des revendications 10 à 17, caractérisé en ce qu'on prépare l'hydroxycarbonate de magnésium par réaction d'un précurseur magnésien avec un agent de carbonatation.

19. Procédé selon la revendication 18, caractérisé en ce qu'on utilise un précurseur magnésien dans le groupe comprenant la sulfate de magnésium, le chlorure de magnésium, le nitrate de magnésium.

20. Procédé selon la revendication 18 ou 19, caractérisé en ce qu'on utilise comme agent de carbonatation un carbonate de sodium ou d'ammonium, ou du dioxyde de carbone.

21. Procédé selon l'une des revendications 18 à 20, caractérisé en ce qu'on conduit la réaction précitée en phase aqueuse ce par quoi on obtient une précipitation de l'hydroxycarbonate de magnésium.

22. Procédé selon des revendications 18 à 21, caractérisé en ce qu'on conduit la réaction précitée à une température comprise entre 80 et 90 °C.

Office européen
des brevets

RAPPORT DE RECHERCHE EUROPEENNE

Numero de la demande

EP    90 40 0919
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | E. Pietsch: "Gmelins Handbuch der Anorganischen Chemie", Vol 27 Part B, Pag. 98-102, 1939, Verlag Chemie <br> * page 99, paragraphe:"Krystalstruktur" * | 1, 3 | C01F5/28 <br> C01F5/24 |
| Y | | 4-6 | |
| | --- | | |
| X | US-A-4044112 (MOSS) <br> * exemple 1* | 8-11, 13-16 | |
| Y | * colonne 4, lignes 40 - 53 * | 4-6 | |
| | --- | | |
| X | CHEMICAL ABSTRACTS, vol. 87, no. 2, 11 juillet 1977 <br> Columbus, Ohio, USA <br> S.Ikeda et al.: "Manufacture of magnesium fluoride" <br> page 130; colonne de droite; ref. no. 8112 E <br> * abrégé * | 8, 9 | |
| | --- | | |
| X | DE-A-3046147 (KALI-CHEMIE) <br> * le document en entier * | 8, 9 | |
| | --- | | DOMAINES TECHNIQUES RECHERCHES (Int. Cl.5) |
| X | CHEMICAL ABSTRACTS, vol. 107, no. 14, octobre 1987 <br> Columbus, Ohio, USA <br> E.Patrascu et al.: "Manufacture of magnesium fluoride" <br> page 129; colonne de droite; ref. no. 117845 Y <br> * abrégé * | 8, 9 | C01F <br> C04B |
| | --- | | |
| A | CHEMICAL ABSTRACTS, vol. 99, no. 2, 1983 <br> Columbus, Ohio, USA <br> V.L.Shapoval et al.: "Effect of synthesis parameters on the quality of magnesium fluoride" <br> page 614; colonne de droite; ref. no. 15402 A <br> * abrégé * | 8-10 | |
| A | | 7 | |
| | --- | | |
| | -/-- | | |

Le présent rapport a été établi pour toutes les revendications

| Lieu de la recherche | Date d'achèvement de la recherche | Examinateur |
|---|---|---|
| LA HAYE | 21 AOUT 1990 | ZALM W.E. |

Office européen
des brevets

**RAPPORT DE RECHERCHE EUROPEENNE**

Numero de la demande

EP 90 40 0919
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 110, no. 16, 17 avril 1989<br>Columbus, Ohio, USA<br>G. Gu et al.: "Production of light magnesium carbonate from ammonium bicarbonate."<br>page 172; ref. no. 138139 Y<br>* abrégé * | 18, 19 | |
| A | CHEMICAL ABSTRACTS, vol. 91, no. 16, octobre 1979<br>Columbus, Ohio, USA<br>J. Arie et al.: "Crystalline normal magnesium carbonate"<br>page 55; colonne de gauche; ref. no. 124669 H<br>* abrégé * | 18-22 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 21 AOUT 1990 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)